# EUROPEAN PATENT APPLICATION

(11) **EP 4 415 438 A1**
(43) Date of publication of application: **14.08.2024**
(21) Application number: 22881416.6
(22) Date of filing: 14.10.2022
(51) Int. Cl.: H04W 64/00, H04W 24/10, H04W 72/04

(54) **METHOD AND DEVICE FOR PRESETTING ASSISTANCE DATA FOR POSITIONING OF TERMINAL IN WIRELESS COMMUNICATION SYSTEM**

(30) Priority: 15.10.2021 KR 20210137823
(71) Applicant: Samsung Electronics Co., Ltd., Suwon-si, Gyeonggi-do 16677 (KR)
(72) Inventor: HWANG, June, Suwon-si, Gyeonggi-do 16677 (KR)
(74) Representative: Gulde & Partner
(86) International application number: PCT/KR2022/015635
(87) International publication number: WO 2023/063789

(57) **Abstract**

Provided is a method by which a location server provides assistance information for location information measurement to a UE and the UE uses the assistance information to measure and obtain location information in a wireless communication system, the method including: transmitting an assistance data (AD) preconfiguration request message to a location server; receiving an AD provision message including validity information from the location server; receiving a location information request from the location server; and transmitting location information to the location server, based on the AD provision message including the validity information, wherein the validity information may include at least one of cell list information, beam list information, timer information or time window information.

## Description

### Technical Field

The disclosure relates to a wireless communication system, and more particularly, to a method and device by which a location server provides a target terminal with assistance information for measuring location information and based on this, the terminal performs a measurement to obtain location information.

### BACKGROUND ART

To meet the explosively increasing demand with respect to wireless data traffic due to an increase in multimedia service and the commercialization of the 4G communication system, an effort for developing an advanced fifth generation (5G) communication system or pre-5G communication system is being made. For this reason, the 5G or pre-5G communication system is also called a beyond 4th-generation (4G) network communication system or post long term evolution (LTE) system. Implementation of the 5G communication system using ultrahigh frequency (millimeter wave (mmWave)) bands, e.g., 60 giga hertz (GHz) bands, is being considered to attain higher data transfer rates. To reduce propagation loss of radio waves and increase a transmission range in the ultra-frequency bands, beamforming, massive multiple-input multiple-output (MIMO), full dimensional MIMO (FD-MIMO), array antenna, analog beamforming, and large-scale antenna techniques are under discussion.

To improve system network performance, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system. In addition, in the 5G system, an advanced coding modulation (ACM), e.g., hybrid FSK and QAM modulation (FQAM), sliding window superposition coding (SWSC), and an advanced access technology, e.g., filter bank multi carrier (FBMC), nonorthogonal multiple access (NOMA), and sparse code multiple access (SCMA) are being developed.

In the meantime, the Internet is evolving from a human-oriented connectivity network where humans create and consume information to an Internet of things (IoT) network where distributed entities or things send, receive and process information without human intervention. Internet of Everything (IoE) technologies, in which a big data processing technology through connection with a cloud server, for example, are combined with IoT technology, have also emerged. To implement IoT, various technologies, such as a sensing technology, a wired/wireless communication and network infrastructure, a service interfacing technology, and a security technology are required, and recently, technologies such as sensor networks, Machine to Machine (M2M) communication, and Machine Type Communication (MTC) for connection between things are being studied. In an IoT environment, intelligent Internet technology (IT) services that create new values for human life by collecting and analyzing data generated from connected things may be provided. IoT may be applied to a variety of areas, such as smart homes, smart buildings, smart cities, smart cars or connected cars, smart grids, health care, smart home appliances and advanced medical services through convergence and combination between existing Information Technologies (IT) and various industrial applications.

In this regard, various attempts to apply the 5G communication system to the IoT network are being made. For example, technologies regarding sensor networks, M2M communication, MTC, etc., are implemented by 5G communication technologies, such as beamforming, MIMO, array antenna schemes, etc. Application of a cloud radio access network (cloud RAN) as the aforementioned big data processing technology may be an example of convergence of 5G and IoT technologies.

With the development of the aforementioned technologies and wireless communication systems, it is possible to provide various services, and there is a need for a method to provide the services effectively.

### Disclosure

### Technical Problem

The disclosure relates to an operation and signaling system for reducing time required for a procedure for ordering measurement by a location server preconfiguring assistance data required in instructing a terminal to perform a measurement.

### Technical Solution

According to an embodiment of the disclosure, a method performed by a location server and a user equipment (UE) in a wireless communication system may be provided. The location server may transmit assistance information by associating it with particular location and time information in transmitting the assistance information to a UE, and the UE may use the associated assistance information when the UE reaches the particular location or corresponds to the particular time information, thereby reducing a delay in signaling between an additional UE and the location server.

According to an embodiment of the disclosure, a method of operating a UE in a wireless communication system may include: transmitting, by the UE, an assistance data preconfiguration request message to a location server; receiving an assistance data (AD) provision message including validity information from the location server; receiving a location information request from the location server; and transmitting location information to the location server based on the message providing AD including the validity information, wherein the validity information may include at least one of cell list information, beam list information, timer information or time window information.

### Description of Drawings

FIG. 1 illustrates a structure of a long term evolution (LTE) system, according to an embodiment of the disclosure.
FIG. 2 illustrates a radio protocol architecture of an LTE system, according to an embodiment of the disclosure.
FIG. 3 illustrates a structure of a next generation mobile communication system, according to an embodiment of the disclosure.
FIG. 4 illustrates a radio protocol architecture of a next generation mobile communication system, according to an embodiment of the disclosure.
FIG. 5 is a block diagram illustrating an internal structure of a user equipment (UE), according to an embodiment of the disclosure.
FIG. 6 is a block diagram illustrating a configuration of a base station (BS), according to an embodiment of the disclosure.
FIG. 7 is a flowchart illustrating a method of providing specific-cell based assistance information, according to an embodiment of the disclosure.
FIG. 8 is a flowchart of operation of a UE in an idle state in providing specific-cell based assistance information, according to an embodiment of the disclosure.
FIG. 9 is a flowchart illustrating a method of providing a serving beam list in assistance data (AD) validity information, according to an embodiment of the disclosure.
FIG. 10 is a flowchart illustrating a method of operating a UE, according to an embodiment of the disclosure.

### Mode for Invention

Advantages and features of the disclosure, and methods for attaining them will be understood more clearly with reference to the following embodiments of the disclosure, which will be described in detail later along with the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to those of ordinary skill in the art. Like numbers refer to like elements throughout the specification.

It will be understood that each block and combination of the blocks of a flowchart may be performed by computer program instructions. The computer program instructions may be loaded onto a processor of a universal computer, a special-purpose computer, or other programmable data processing equipment, and thus they generate means for performing functions described in the block(s) of the flowcharts when executed by the processor of the computer or other programmable data processing equipment. The computer program instructions may also be stored in computer-executable or computer-readable memory that may direct the computers or other programmable data processing apparatus to function in a particular manner, such that the instructions stored in the computer-executable or computer-readable memory may produce an article of manufacture including instruction means that perform the functions specified in the flowchart blocks(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or in reverse order depending on the corresponding functions.

The term "module" (or sometimes "unit") as used herein refers to a software or hardware component, such as field programmable gate array (FPGA) or application specific integrated circuit (ASIC), which performs some functions. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a small number of components and modules, or further divided into a larger number of components and modules. Moreover, the components and modules may be implemented to execute one or more central processing units (CPUs) in a device or security multimedia card. In embodiments, the module may include one or more processors.

Descriptions of some well-known technologies that possibly obscure the disclosure will be omitted, if necessary. Embodiments of the disclosure will now be described with reference to accompanying drawings.

Herein, terms to identify access nodes, terms to refer to network entities, terms to refer to messages, terms to refer to interfaces among network entities, terms to refer to various types of identification information, etc., are examples for convenience of explanation. Accordingly, the disclosure is not limited to the terms as herein used, and may use different terms to refer to the items having the same meaning in a technological sense.

Some of the terms and names defined by the 3rd generation partnership project (3GPP) long term evolution (LTE) will be used hereinafter. The disclosure is not, however, limited to the terms and definitions, and may equally apply to any systems that conform to other standards. In the disclosure, for convenience of explanation, eNode B (eNB) may be interchangeably used with gNode B (gNB). For example, a BS referred to as an eNB may also indicate a gNB. Furthermore, the term 'terminal' or 'user equipment (UE)' may refer not only to a cell phone, an NB-IoT device, and a sensor but also to another wireless communication device.

In the following description, a base station is an entity for performing resource allocation for a terminal, and may be at least one of a gNB, an eNB, a Node B, a base station (BS), a radio access unit, a base station controller, or a network node. The terminal may include a user equipment (UE), a mobile station (MS), a cellular phone, a smart phone, a computer, or a multimedia system capable of performing a communication function. It is, of course, not limited thereto.

Especially, the disclosure may be applied to the 3GPP new radio (NR) (which is the 5G mobile communication standard). The disclosure may be applied to intelligent services based on fifth generation (5G) communication and Internet of things (IoT) related technologies, e.g., smart homes, smart buildings, smart cities, smart cars, connected cars, health care, digital education, smart retail, and security and safety services. In the disclosure, evolved node B (eNB) may be interchangeably used with gNB. For example, a BS referred to as an eNB may also indicate a gNB. Furthermore, the term 'terminal' or 'user equipment (UE)' may refer not only to a cell phone, an NB-IoT device, and a sensor but also to other wireless communication devices.

Wireless communication systems are evolving from early systems that provide voice-oriented services to broadband wireless communication systems that provide high data rate and high quality packet data services such as 3GPP high speed packet access (HSPA), long term evolution (LTE) or evolved universal terrestrial radio access (E-UTRA), LTE-advanced (LTE-A), LTE-Pro, 3GPP2 high rate packet data (HRPD), ultra mobile broadband (UMB), and IEEE 802.16e communication standards.

As a representative example of such a broadband wireless communication system, an LTE system adopts orthogonal frequency division multiplexing (OFDM) for a downlink (DL) and single carrier frequency division multiple access (SC-FDMA) for an uplink (UL). The UL refers to a radio link for a UE or MS to send data or a control signal to an eNode B or BS, and the DL refers to a radio link for a BS to send data or a control signal to a UE or MS. Such a multiple access scheme allocates and operates time-frequency resources for carrying data or control information for respective users not to overlap each other, i.e., to maintain orthogonality, thereby differentiating each user's data or control information.

As a future communication system after the LTE, the 5G communication system needs to freely reflect various demands from users and service providers and thus support services that simultaneously meet the various demands. The services considered for the 5G communication system may include enhanced Mobile Broadband (eMBB), massive Machine Type Communication (mMTC), Ultra Reliability Low Latency Communication (URLL), etc.

In some embodiments, the eMBB is aimed at providing more enhanced data rates than the LTE, LTE-A or LTE-Pro may support. For example, in the 5G communication system, the eMBB is required to provide 20 Gbps peak data rate in DL and 10 Gbps peak data rate in UL in terms of a single BS. Furthermore, the 5G communication system may need to provide an increasing user perceived data rate while providing the peak data rate. To satisfy these requirements, enhancement of various technologies for transmission or reception including multiple-input multiple-output (MIMO) transmission technologies may be required in the 5G communication system. While the present LTE uses up to 20 MHz transmission bandwidth in the 2 GHz band for signal transmission, the 5G communication system may use frequency bandwidth wider than 20 MHz in the 3 to 6 GHz band or in the 6 GHz or higher band, thereby satisfying the data rate required by the 5G communication system.

At the same time, in the 5G communication system, mMTC is considered to support an application service such as an Internet of Things (IoT) application service. In order for the mMTC to provide the IoT efficiently, support for access from massive number of terminals in a cell, enhanced coverage of the terminal, extended battery time, reduction in terminal price, etc., may be required. Because the IoT is equipped in various sensors and devices to provide communication functions, it may be supposed to support a large number of UEs in a cell (e.g., 1,000,000 terminals/km2). Furthermore, a UE supporting the mMTC is more likely to be located in a shadow area, such as a basement of a building, which might not be covered by a cell due to the nature of the service, so the mMTC may require an even larger coverage than expected for other services provided by the 5G communication system. The UE supporting the mMTC needs to be a low-cost terminal, and may require quite a long battery life time such as 10 to 15 years because it is difficult to frequently change the battery in the UE.

Finally, the URLLC may be a mission-critical cellular based wireless communication service, which may be used for services used for remote control over robots or machinery, industrial automation, unmanned aerial vehicle, remote health care, emergency alert, etc. Accordingly, communication offered by the URLLC may require very low latency (ultra low latency) and very high reliability. For example, URLLC services may need to satisfy sub-millisecond (less than 0.5 millisecond) air interface latency and simultaneously require a packet error rate equal to or less than 10-5. Hence, for the URLLC services, the 5G system needs to provide a smaller transmit time interval (TTI) than for other services, and simultaneously requires a design that allocates a wide range of resources for a frequency band to secure reliability of the communication link.

Those three services considered in the aforementioned 5G communication system, i.e., eMBB, URLLC, and mMTC, may be multiplexed and transmitted from a single system. In this case, to meet different requirements for the three services, different transmission or reception schemes and parameters may be used between the services. The mMTC, URLLC, and eMBB are an example of different types of services, and embodiments of the disclosure are not limited to the service types.

Although the following embodiments of the disclosure will now be focused on an LTE, LTE-A, LTE Pro or 5G (or NR, next generation mobile communication) system for example, they may be equally applied to other communication systems with similar technical backgrounds or channel types. Furthermore, embodiments of the disclosure will also be applied to different communication systems with some modifications to such an extent that they do not significantly deviate from the scope of the disclosure when judged by those of ordinary skill in the art.

Operating principles of embodiments of the disclosure will now be described with reference to accompanying drawings. Descriptions of some well-known technologies that possibly obscure the disclosure will be omitted, if necessary. Further, the terms, as will be mentioned later, are defined by taking functionalities in the disclosure into account, but may vary depending on practices or intentions of users or operators. Accordingly, the terms should be defined based on descriptions throughout this specification.

When providing assistance information for location measurement to a UE, a location server may provide assistance information to be always used at a time when measurement is instructed. This may basically consume a time for transmitting the assistance information in this procedure because when the UE reaches a particular location or time, the location server needs to newly download assistance information which is always valid at the location or the time. This causes a delay in the overall location measurement procedure of the UE. The disclosure relates to a method and device by which the location server provides assistance information for measuring location information to a target UE by associating the assistance information with particular time information, region information, etc., and based on this, the UE makes a measurement to obtain location information.

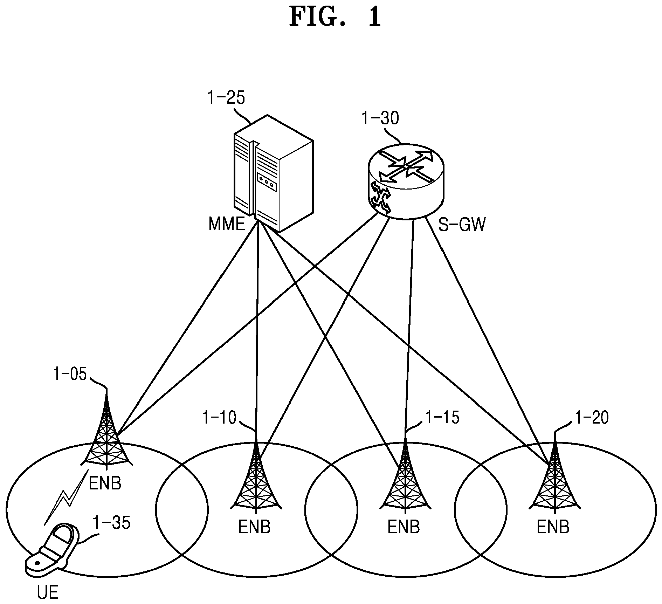

FIG. 1 illustrates a structure of an existing LTE system.

Referring to FIG. 1, a radio access network of the LTE system as shown may include evolved Node Bs (hereinafter, also referred to as ENBs, Node Bs, or base stations (BSs)) 1-05, 1-10, 1-15, and 1-20, a mobility management entity (MME) 1-25, and a serving gateway (S-GW) 1-30. A UE (or terminal) 1-35 may access an external network via the ENB 1-05 to 1-20 and the S-GW 1-30.

In FIG. 1, the ENBs 1-05 to 1-20 may correspond to the existing node Bs in a universal mobile telecommunication system (UMTS). The ENB may be connected to the UE 1-35 via a wireless channel, and may play a more sophisticated role than the existing node B does. In the LTE system, all user traffic including real-time services such as Voice over IP (VoIP) through the Internet protocol may be served on shared channels. Accordingly, there is a need for a device to aggregate status information about buffer status of UEs, available transmission power status, a channel condition, etc., and schedule them, and the ENBs 1-05 to 1-20 may serve as the device. A single ENB may generally control a number of cells. To achieve e.g., 100 Mbps of transmission speed, the LTE system may use orthogonal frequency division multiplexing (OFDM) as a radio access technology in e.g., 20 MHz bandwidth. Furthermore, an adaptive modulation and coding (AMC) scheme that determines a modulation scheme and channel coding rate according to a channel condition of the UE may be applied. The S-GW 1-30 may be a device to provide data bearers, producing or eliminating data bearers under the control of the MME 1-25. The MME is a device responsible for various control functions as well as a mobility management function for the UE, and may be connected to multiple BSs.

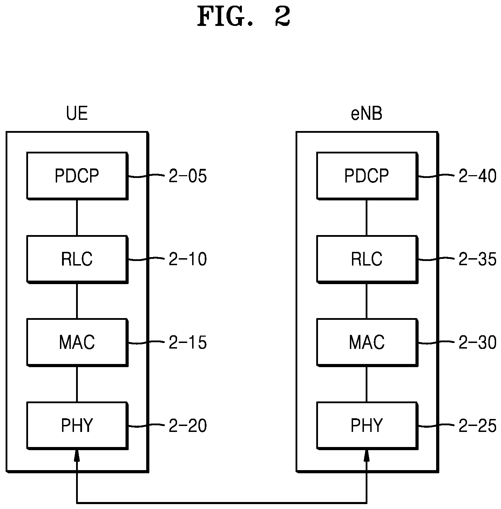

FIG. 2 illustrates a radio protocol architecture of an LTE system, according to an embodiment of the disclosure.

Referring to FIG. 2, the radio protocol for an LTE system may include, for each of the UE and the ENB, a packet data convergence protocol (PDCP) 2-05 or 2-40, a radio link control (RLC) 2-10 or 2-35, a medium access control (MAC) 2-15 or 2-30, and a physical (PHY) device (or layer) 2-20 or 2-25. Obviously, it is not limited thereto, but it may include fewer or more devices than illustrated.

In an embodiment of the disclosure, the PDCP may be responsible for operations such as IP header compression/reconstruction. The main functions of the PDCP may be summarized as follows:
- header compression and decompression function (e.g., header compression and decompression: robust header compression (ROHC) only)
- user data transfer function
- sequential delivery function (e.g., in-sequence delivery of upper layer packet data units (PDUs) at PDCP re-establishment procedure for radio link control (RLC) acknowledged mode (AM))
- reordering function (e.g., for split bearers in dual connectivity (DC) (only support for RLC AM): PDCP PDU routing for transmission and PDCP PDU reordering for reception)
- duplicate detection function (e.g., duplicate detection of lower layer SDUs at PDCP re-establishment procedure for RLC AM)
- retransmission function (e.g., retransmission of PDCP SDUs at handover and, for split bearers in DC, of PDCP PDUs at PDCP data-recovery procedure, for RLC AM)
- ciphering and deciphering function
- timer-based SDU discarding function (e.g., timer-based SDU discarding in uplink)

In an embodiment, the RLC 2-10 or 2-35 may reconfigure a PDCP packet data unit (PDU) into a suitable size to perform e.g., an automatic repeat request (ARQ) operation. The main functions of the RLC may be summarized as follows:
- data transfer function (e.g., transfer of upper layer PDUs)
- ARQ function (e.g., error correction through ARQ (only for AM data transfer))
- concatenation, segmentation, and reassembling function (e.g., concatenation, segmentation and reassembly of RLC SDUs (only for UM and AM data transfer))
- re-segmentation function (e.g., re-segmentation of RLC data PDUs (only for AM data transfer))
- reordering function (e.g., reordering of RLC data PDUs (only for UM and AM data transfer))
- duplicate detection function (e.g., duplicate detection (only for UM and AM data transfer))
- error detection function (e.g., protocol error detection (only for AM data transfer))
- RLC service data unit (SDU) discard function (e.g., RLC SDU discard (only for unacknowledged mode (UM) and AM data transfer))
- RLC re-establishment function

In an embodiment, the MAC layer 2-15 or 2-30 may be connected to a number of RLC layer devices configured in one UE, and may perform operations of multiplexing RLC PDUs to a MAC PDU and demultiplexing RLC PDUs from a MAC PDU. The main functions of the MAC layer 1b-15 or 1b-30 may be summarized as follows:
- mapping function (e.g., mapping between logical channels and transport channels)
- multiplexing and demultiplexing function (e.g., multiplexing/demultiplexing of MAC SDUs belonging to one or different logical channels into/from transport blocks (TB) delivered to/from the physical layer on transport channels)
- scheduling information report function
- hybrid automatic repeat request (HARQ) function (error correction through HARQ)
- logical channel priority control function (e.g., priority handling between logical channels of one UE)
- UE priority control function (e.g., priority handling between UEs by means of dynamic scheduling)
- multimedia broadcast and multicast service (MBMS) service identification function
- transport format selection function
- padding function

In an embodiment, a PHY layer 2-20 or 2-25 may perform channel coding and modulation on higher layer data, form the data into OFDM symbols and transmit them on a radio channel, or may demodulate OFDM symbols received on a radio channel, perform channel decoding on them and send the result to a higher layer.

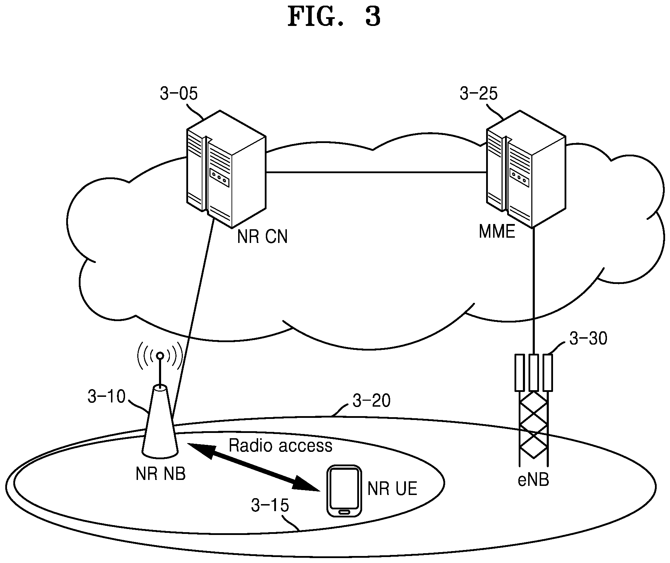

FIG. 3 illustrates a structure of a next generation mobile communication system, according to an embodiment of the disclosure.

Referring to FIG. 3, a radio access network of the next generation mobile communication system (hereinafter, NR or 5G) may include a new radio node B, hereinafter, referred to as an NR gNB or NR BS 3-10, and a new radio core network (NR CN) 3-05. A new radio user equipment (NR UE or terminal) 3-15 may access an external network through the NR gNB 3-10 and the NR CN 3-05.

In FIG. 3, the NR gNB 3-10 may correspond to an evolved Node B (eNB) of the existing LTE system. The NR gNB may be connected to the NR UE 3-15 via a radio channel, and may provide much better service than the existing node B does. In the NR system, all user traffic may be served on shared channels. Accordingly, there is a need for a device for aggregating status information about buffer status of UEs, available transmission power status, channel conditions, etc., together and schedule them, and the NR gNB 3-10 may serve as the device. A single NR gNB may control a number of cells. In the NR system, to achieve ultra high-speed data transmission compared to the current LTE, bandwidth greater than the current maximum bandwidth may be applied. Furthermore, a beamforming technology may be additionally combined with a radio access technology employing OFDM. An adaptive modulation and coding (AMC) scheme that determines a modulation scheme and a channel coding rate according to the channel condition of the UE may also be used. The NR CN 3-05 may perform such functions as supporting mobility, setting up a bearer, setting quality of service (QoS), etc. NR CN is a device responsible for various control functions as well as mobility management functionality for the UE, and may be connected to a number of BSs. Moreover, the NR system may cooperate with the existing LTE system, in which case the NR CN may be connected to an MME 3-25 through a network interface. The MME may be connected to an existing BS, eNB 3-30.

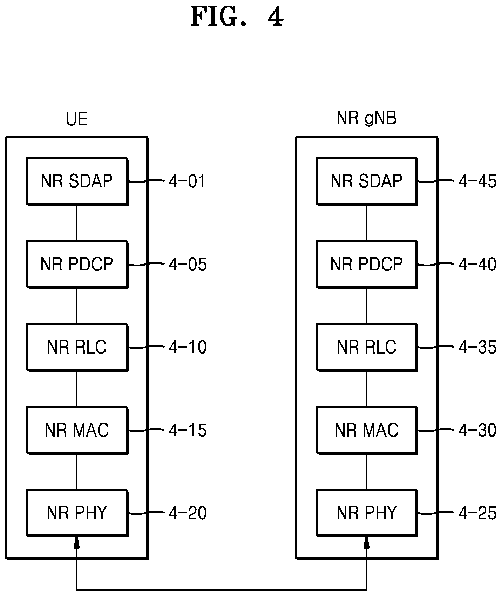

FIG. 4 illustrates a radio protocol architecture of a next generation mobile communication system, according to an embodiment of the disclosure..

Referring to FIG. 4, a radio protocol for the NR system includes, for each of a UE and an NR gNB, an NR service data adaptation protocol (SOAP) 4-01 or 4-45, an NR PDCP 4-05 or 4-40, an NR RLC 4-10 or 4-35, an NR MAC 4-15 or 4-30, and an NR PHY 4-20 or 4-25. Obviously, it is not limited thereto, and it may include fewer or more devices (or layers) than described above.

In an embodiment, main functions of the NR SOAP 4-01 or 4-45 may include some of the following functions:
- a function of transfer of user plane data
- a function of mapping between a quality of service (QoS) flow and a data bearer (DRB) for both downlink (DL) and uplink (UL)
- a function of marking QoS flow identification (ID) in both UL and DL
- function of mapping of a reflective QoS flow to a DRB for UL SDAP PDUs.

For an SOAP layer device, the UE may receive a configuration of whether to use a header of the SOAP layer device or whether to use a function of the SADP layer device for each PDCP layer device, each bearer or each logical channel in a radio resource control (RRC) message received from the BS. When an SOAP header is configured, a 1-bit non-access stratum (NAS) reflective QoS (NAS reflective QoS) indicator and a 1-bit access stratum (AS) reflective QoS (AS reflective QoS) indicator may be used to indicate for the UE to update or reconfigure the mapping information between the UL and DL QoS flow and the data bearer. The SOAP header may include QoS flow ID information indicating QoS. The QoS information may be used for data process priority, scheduling, etc., for smoother services.

In an embodiment, main functions of the NR PDCP 4-05 or 4-40 may include some of the following functions:
- header compression and decompression function (e.g., header compression and decompression: robust header compression (ROHC) only)
- user data transfer function
- sequential delivery function (e.g., in-sequence delivery of upper layer PDUs)
- non-sequential delivery function (e.g., out-of-sequence delivery of upper layer PDUs)
- reordering function (e.g., PDCP PDU reordering for reception)
- duplicate detection function (e.g., duplicate detection of lower layer SDUs)
- retransmission function (e.g., retransmission of PDCP SDUs)
- ciphering and deciphering function
- timer-based SDU discarding function (e.g., timer-based SDU discarding in uplink)

In the above description, the reordering function of the NR PDCP device may refer to a function of reordering PDCP PDUs received from a lower layer based on PDCP sequence numbers (SNs). The reordering function of the NR PDCP device may include a function of delivering data to a higher layer in the reordered sequence or delivering the data directly to the higher layer without considering the sequence, a function of reordering the sequence to record missing PDCP PDUs, a function of reporting status of missing PDCP PDUs to a transmitting end, or a function of requesting retransmission of missing PDCP PDUs.

In an embodiment, main functions of the NR RLC 4-10 or 4-35 may include some of the following functions:
- data transfer function (e.g., transfer of upper layer PDUs)
- sequential delivery function (e.g., in-sequence delivery of upper layer PDUs)
- non-sequential delivery function (e.g., out-of-sequence delivery of upper layer PDUs)
- ARQ function (e.g., error correction through ARQ)
- concatenation, segmentation, and reassembling function (e.g., concatenation, segmentation and reassembly of RLC SDUs)
- re-segmentation function (e.g., re-segmentation of RLC data PDUs)
- reordering function (e.g., reordering of RLC data PDUs)
- duplicate detection function
- error detection function (e.g., protocol error detection)
- RLC SDU discard function
- RLC re-establishment function

In the aforementioned description, the sequential delivery function of the NR RLC device may refer to a function of delivering RLC SDUs received from a lower layer to a higher layer in sequence. When several RLC SDUs split from an original RLC SDU are received, the sequential (in-sequence) delivery of the NR RLC device may include a function of re-assembling them and delivering the result.

The sequential delivery function of the NR RLC device may include a function of reordering the received RLC PDUs based on RLC sequence numbers (SNs) or PDCP SNs, a function of reordering the sequence to record missing RLC PDUs, a function of reporting status of missing RLC PDUs to a transmitting end, or a function of requesting retransmission of missing PDCP PDUs.

The sequential delivery function of the NR RLC device may include, when there is a missing RLC SDU, a function of delivering only RLC SDUs before the missing RLC SDU to a higher layer in sequence.

The sequential delivery function of the NR RLC device may include, when a certain timer has been expired even though there is a missing RLC SDU, a function of delivering all the received RLC SDUs to a higher layer in sequence before the timer is started.

The sequential delivery function of the NR RLC device may include, when a certain timer has been expired even though there is a missing RLC SDU, a function of delivering all the RLC SDUs received until the present time to a higher layer in sequence.

The NR RLC device may process the RLC PDUs out of sequence from the sequence numbers but in reception order, and deliver the result to the NR PDCP device.

When receiving segments, the NR RLC device may receive segments stored in the buffer or segments received later and reassemble them into a complete RLC PDU, and deliver the RLC PDU to the NR PDCP device.

The NR RLC layer may not include the concatenation function, and the concatenation function may be performed in the NR MAC layer or replaced with the multiplexing function of the NR MAC layer.

In the aforementioned description, the non-sequential delivery (out-of-sequence delivery) function of the NR RLC device may refer to a function of delivering RLC SDUs received from a lower layer directly to a higher layer without regard to the sequence of the RLC SDUs. The non-sequential delivery function of the NR RLC device may include, when several RLC SDUs split from an original RLC SDU is received, a function of reassembling them and delivering the result. The non-sequential delivery function of the NR RLC device may include a function of storing RLC sequence numbers (SNs) or PDCP SNs of the received RLC PDUs and ordering the sequence to record missing RLC PDUs.

In an embodiment, the NR MAC layer 4-15 or 4-30 may be connected to multiple NR RLC layer devices configured in the same UE, and main functions of the NR MAC layer may include some of the following functions:
- mapping function (e.g., mapping between logical channels and transport channels)
- multiplexing and demultiplexing function (e.g., multiplexing/demultiplexing of MAC SDUs)
- scheduling information report function
- HARQ function (e.g., error correction through HARQ)
- logical channel priority control function (e.g., priority handling between logical channels of one UE)
- UE priority control function (e.g., priority handling between UEs by means of dynamic scheduling)
- MBMS service identification function
- transport format selection function
- padding function

In an embodiment, the NR PHY layer 4-20 or 4-25 may perform channel coding and modulation on higher layer data, form the data into OFDM symbols and send them on a radio channel, or may demodulate OFDM symbols received on a radio channel, perform channel decoding on them and send the result to a higher layer.

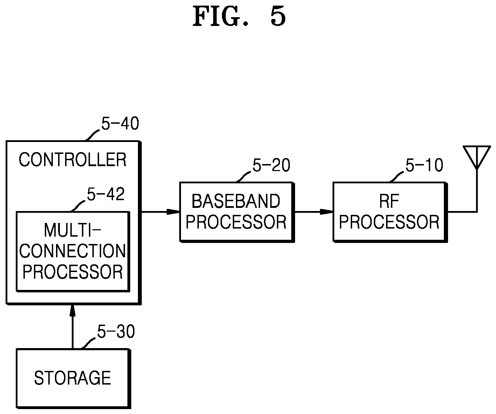

FIG. 5 is a block diagram illustrating an internal structure of a UE, according to an embodiment of the disclosure.

Referring to FIG. 5, a UE may include a radio frequency (RF) processor 5-10, a baseband processor 5-20, a storage 5-30, and a controller 5-40. Obviously, it is not limited thereto, and the UE may include more or fewer components than illustrated in FIG. 5

The RF processor 5-10 may perform functions, such as band conversion, amplification, etc., of a signal to transmit or receive the signal on a radio channel. Specifically, the RF processor 5-10 may up-convert a baseband signal provided from the baseband processor 5-20 to an RF band signal for transmission through an antenna, and down-convert an RF band signal received through the antenna to a baseband signal. For example, the RF processor 5-10 may include a transmit filter, a receive filter, an amplifier, a mixer, an oscillator, a digital to analog converter (DAC), an analog to digital converter (ADC), etc. Although only one antenna is shown in FIG. 5, the UE may include multiple antennas. The RF processor 5-10 may also include multiple RF chains. Furthermore, the RF processor 5-10 may perform beamforming. For beamforming, the RF processor 5-10 may control the phase and amplitude of each signal to be transmitted or received through multiple antennas or antenna elements. Furthermore, the RF processor 5-10 may perform multiple-input-multiple-output (MIMO), and may receive a number of layers during the MIMO operation.

The baseband processor 5-20 may perform a function of conversion between a baseband signal and a bit sequence based on the physical layer standard of the system. For example, for data transmission, the baseband processor 5-20 may generate complex symbols by encoding and modulating a bit sequence for transmission. Furthermore, when data is received, the baseband processor 5-20 may reconstruct a received bit sequence by demodulating and decoding the baseband signal provided from the RF processor 5-10. For example, in a case of conforming to an OFDM scheme, for data transmission, the baseband processor 5-20 may generate complex symbols by encoding and modulating a bit sequence for transmission, map the complex symbols to subcarriers, and perform inverse fast Fourier transform (IFFT) operation and cyclic prefix (CP) insertion to construct OFDM symbols. Furthermore, for data reception, the baseband processor 5-20 may divide a baseband signal provided from the RF processor 5-10 into OFDM symbol units, reconstruct the signals mapped to the subcarriers through fast Fourier transform (FFT) and then reconstruct a received bit sequence through demodulation and decoding.

The baseband processor 5-20 and the RF processor 5-10 may transmit and receive signals as described above. The baseband processor 5-20 and the RF processor 5-10 may be referred to as a transmitter, a receiver, a transceiver, or a communicator. Furthermore, at least one of the baseband processor 5-20 and the RF processor 5-10 may include multiple communication modules to support many different radio access technologies. Moreover, at least one of the baseband processor 5-20 and the RF processor 5-10 may include different communication modules to process different frequency band signals. For example, the different radio access technologies may include a wireless local area network (WLAN), e.g., the IEEE 802.11, a cellular network, e.g., LTE, etc. Furthermore, the different frequency bands may include a super high frequency (SHF) (e.g., 2.NRHz, NRhz) band, and millimeter wave (mmwave) (e.g., 60 GHz) band.

The storage 5-30 may store data such as a basic program for operation of the terminal, an application program, settings information, etc. In particular, the storage 5-30 may store information regarding a second access node that performs wireless communication using a second radio access technology. The storage 5-30 may provide the stored data at the request of the controller 5-40. Moreover, the storage 5-30 may include a plurality of memories.

The controller 5-40 may control general operations of the UE. For example, the controller 5-40 may transmit or receive a signal through the baseband processor 5-20 and the RF processor 5-10. The controller 5-40 may also record data onto the storage 5-40 or read out data from the storage 5-40. For this, the controller 5-40 may include at least one processor. For example, the controller 5-40 may include a communication processor (CP) for controlling communication and an application processor (AP) for controlling a higher layer such as an application program.

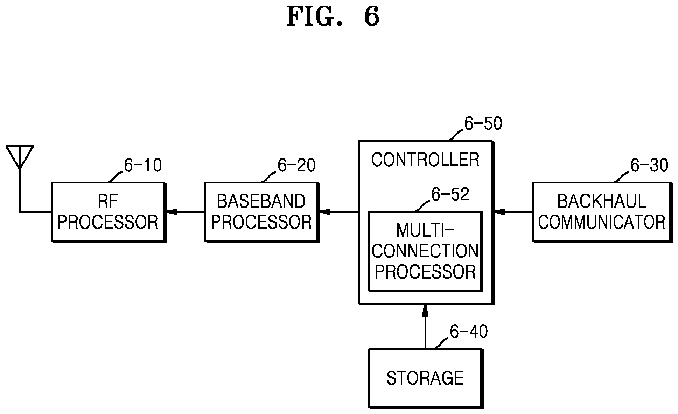

FIG. 6 is a block diagram illustrating a configuration of a base station (BS), according to an embodiment of the disclosure.

As shown in FIG. 6, the BS (or gNB) may include an RF processor 6-10, a baseband processor 6-20, a communicator 6-30, a storage 6-40, and a controller 6-50. It is, of course, not limited thereto, and the gNB may include more or fewer components than in FIG. 6

The RF processor 6-10 may perform functions, such as band conversion, amplification, etc., of a signal to transmit or receive the signal on a radio channel. Specifically, the RF processor 6-10 may up-convert a baseband signal provided from the baseband processor 6-20 to an RF band signal for transmission through an antenna, and down-convert an RF band signal received through the antenna to a baseband signal. For example, the RF processor 6-10 may include a transmit filter, a receive filter, an amplifier, a mixer, an oscillator, a DAC, an ADC, etc. Although a single antenna is shown in FIG. 6, a first access node may include multiple antennas. The RF processor 6-10 may also include multiple RF chains. Furthermore, the RF processor 6-10 may perform beamforming. For beamforming, the RF processor 6-10 may control the phase and amplitude of each signal to be transmitted or received through multiple antennas or antenna elements. The RF processor may perform downlink MIMO operation by transmitting one or more layers.

The baseband processor 6-20 may perform conversion between a baseband signal and a bit sequence based on a physical layer standard of a first radio access technology. For example, for data transmission, the baseband processor 6-20 may generate complex symbols by encoding and modulating a bit sequence for transmission. Furthermore, when data is received, the baseband processor 6-20 may reconstruct a received bit sequence by demodulating and decoding the baseband signal provided from the RF processor 6-10. For example, when conforming to an OFDM scheme, for data transmission, the baseband processor 6-20 may generate complex symbols by encoding and modulating a bit sequence for transmission, map the complex symbols to subcarriers, and then reconstruct OFDM symbols by IFFT operation and CP insertion. Furthermore, for data reception, the baseband processor 6-20 may divide a baseband signal provided from the RF processor 6-10 into OFDM symbol units, reconstruct the signals mapped to the subcarriers through FFT operation and then reconstruct a received bit sequence through demodulation and decoding. The baseband processor 6-20 and the RF processor 6-10 may transmit and receive signals as described above. The baseband processor 6-20 and the RF processor 6-10 may be referred to as a transmitter, a receiver, a transceiver, or a wireless communicator.

The backhaul communicator 6-30 may provide an interface for communicating with other nodes in the network. Specifically, the backhaul communicator 6-30 may convert a bit sequence to be transmitted from this primary BS to another node, e.g., a secondary BS, a core network, etc., into a physical signal, and convert a physical signal received from another node to a bit sequence.

The storage 6-40 may store data such as a basic program for operation of the primary BS, an application program, settings information, etc. Especially, the storage 6-40 may store information about a bearer allocated to a connected UE, measurements reported from the UE, etc. Furthermore, the storage 6-40 may store information used as a criterion for determining whether to provide or stop multi-connection for the UE. The storage 6-40 may provide the stored data at the request of the controller 6-50. Moreover, the storage 6-40 may include a plurality of memories.

The controller 6-50 controls general operations of the primary BS. For example, the controller 6-50 may transmit or receive a signal through the baseband processor 6-20 and the RF processor 6-10 or the backhaul communicator 6-30. The controller 6-50 may also record data to the storage 6-40 or read out data from the storage 6-40. For this, the controller 6-50 may include at least one processor.

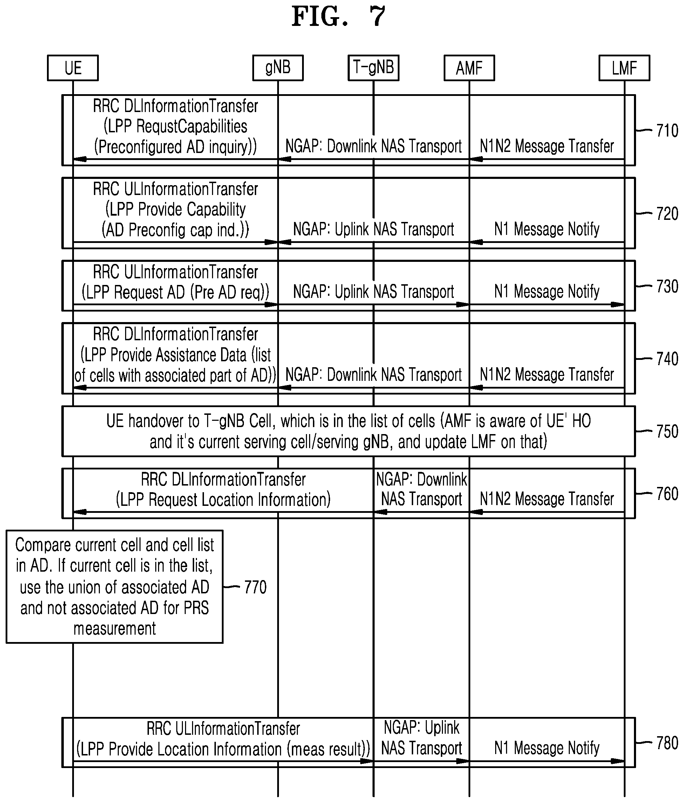

FIG. 7 is a flowchart illustrating a method of providing specific-cell based assistance information, according to an embodiment of the disclosure.

Referring to FIG. 7, shown is an occasion of sending assistance information by associating it with a cell list as an example.

In an embodiment, the assistance information may include segmentation info and periodical assistance data info in a common field.

Furthermore, the assistance information may include NR DL-PRS assistance data (AD) and selected DL PRS info for each method specific field.

NR-DL-PRS-AD may include the following information:
- DL-PRS-ID-Info (A): an id of a reference TRP, and specific PRS resource list info of a specific DL PRS set in the TRP
- nr-DL-PRS-AssistanceDataList (B): DL PRS resource info per TRP per frequency and each frequency information for the reference TRP and (nearby) all TRPs
selected DL PRS info may refer to a selected index of some of indexes of NR-DL-PRS-AD. A location management function (LMF) may provide information of all the measurable DL PRS resources to the NR-DL-PRS-AD with consideration for a current location of a target UE, select some of them and transmit the selected DL PRS index info. The UE may measure the selected DL PRS by using a given method, and may produce a result of a relative measurement through PRS (A) of the given reference TRP.

In relation to the above structure of the AD, in an embodiment of the disclosure, AD associated with pieces of information that guarantee validity may be part or the whole of the pieces of information. Specifically, AD may be associated with a validity guarantee unit and all pieces of DL PRS information or the reference TRP in the method specific field or DL-PRS-ID-Infor or nr-DL-PRS-AssistanceDataList or selected DL PRS info or DL-PRS-ID-Info. The UE may combine the associated part of the AD and the other non-associated parts of the AD into AD for use.

In an embodiment, pieces of information associated to guarantee validity of the AD may include the following information:
- List of cells
- List of beams (and a cell), or list of {list of beams and a cell}
- Timer value
- Time window
- a combination of the pieces of information, i.e., information that uses AND for respective terms

In an embodiment, the LMF (location server) may transmit part or all of the AD associated with the pieces of information to the target UE. Furthermore, there may be multiple pairs of the information that guarantees validity and associated AD. For example, AD1 may be associated with list of cells 1, and AD2 may be associated with list of cells 2. The list of cells may be replaced by other information that guarantees validity, and there may be multiple pairs of association of AD1 with list of cells 1, AD2 with list of cells 2, AD3 with list of cells 3, and so on. When the validity information and partial information of AD are associated and transmitted, AD information required at the moment when the UE actually makes a measurement may be configured with a combination of the partial information and normal information without being associated with the validity information. Transmitting, by the LMF, assistance information to the UE by associating AD with information indicating guarantee of its validity will now be expressed as AD preconfiguration.

In an embodiment, when AD transmitted by the location server is not associated with the validity information, there may be default AD to be used by the UE. In an embodiment, when the target UE receives a request for location information, it may use the default information to obtain location information unless a current location/time condition of the target UE does not match the validity information given in AD. In another embodiment, when the current location/time condition of the target UE does not correspond to the given validity information associated with AD after the target UE receives a request for location information, the target UE may transmit an AD request message to the location server. In this case, the target UE may transmit current location/time information of the target UE in the AD request message.

In an embodiment, when the LMF requests location information from a certain UE, the LMF may first request a location information capability from the UE, and in response, the UE may transmit a location information capability response to the LMF. In this case, an indicator asking if AD preconfiguration is possible may be included in the location information capability request message. On receiving the location capability request message including the indicator asking if AD preconfiguration is possible, the target UE may transmit an indicator indicating that AD preconfiguration is possible in its capability response message. The target UE may put in the capability response message some of pieces of information on a list (e.g., a list of cells, a list of beams (and a cell), or a list of {list of beams and a cell}, a timer value, a time window, a combination of the pieces of information, i.e., information that uses AND for each term, etc.) of what validity information may be associated in addition to the indicator indicating that AD preconfiguration is possible.

In an embodiment, regardless of the capability procedure, when the UE has the corresponding capability or recognizes the need, UE may transmit an indicator requesting AD preconfiguration from the LMF to the location server in a request AD message.

In an embodiment, in sending AD to the target UE, the location server may transmit the AD to the target UE by associating the whole or part of the AD with the validity information.

In an embodiment, after receiving the associated information, and when receiving a request location information message from the location server, the UE may determine whether there is any piece of the received validity information of AD that matches current UE location or time information. When it matches, the UE may obtain location information by using combination or union of AD associated with the validity information and non-associated AD, i.e., common AD information. The location information may be obtained in a way that the target UE reports a value based on signal measurement of a measured PRS to the location server and obtains the location information from the location server based on the reported value, or the target UE estimates a location through information measured by itself.

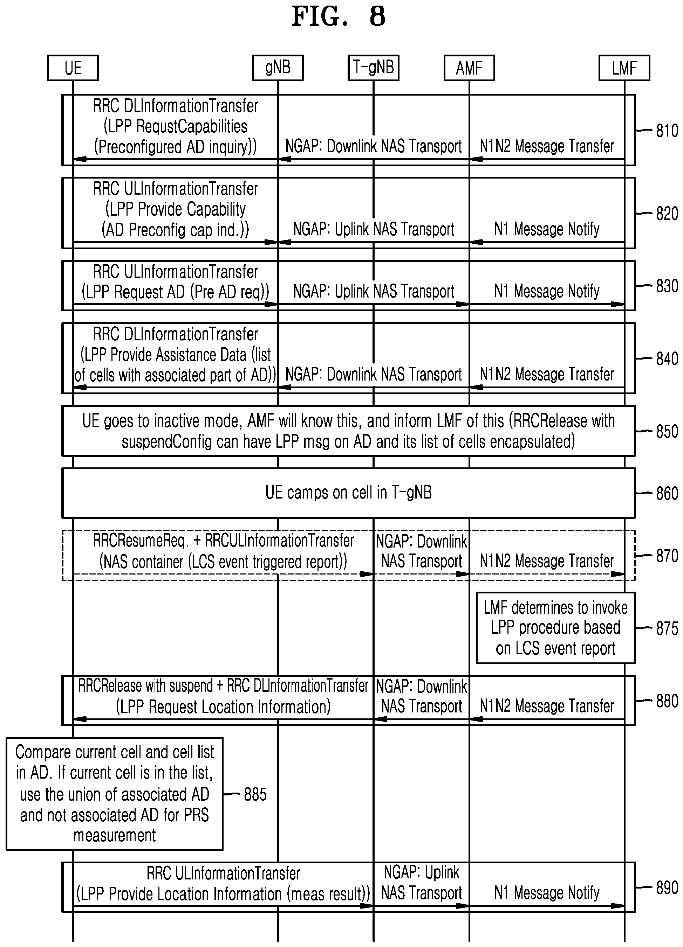

When each type of information for guaranteeing validity (validity information) is provided, an occasion of obtaining valid AD of the UE may include the following.
- when a list of cells is given,
   ■ in a case that the target UE is in a connected state and a current serving Pcell or serving cell is on the list of cells, AD associated with the list may be determined as valid AD. The list of cells may be provided in the plural, and each list of cells may be associated with part or the whole of AD. FIG. 7 shows an occasion when validity information of a list of cells is given in a connected state.
   ■ in a case that the target UE is in an idle/inactive state and a current camping cell or serving cell is on the list of cells, AD associated with the list may be determined as valid AD. The list of cells may be provided in the plural, and each list of cells may be associated with part or the whole of AD. FIG. 8 shows an occasion when validity information of a list of cells is given in an inactive state.
      ■ in a case that the target UE has performed handover in a connected mode or has moved into a new cell by performing cell re-selection in an idle/inactive mode, when the new cell does not correspond to any entry in the given list of cells, the target UE may request AD from the LMF through a request AD message. In this case, the message may include an indicator indicating that movement has been made into a cell that is not on a preconfigured cell list or information about the cell.
      ◆ the information about the cell may include at least one of physical cell identification (PCI), cell global identity (CGI), or absolute radio frequency channel number (ARFCN) information.
- when a list of beams (and with a cell) is given
   ■ when the target UE is in the connected state and has received information about a certain cell and a list of beams present in the cell, the UE may determine AD associated with the list of beams as valid AD when the certain cell corresponds to a current serving cell and is further served with a beam belonging to the beam list.
      ◆ beam information may include, for example, a beam id or index, an index of an SSB/CSI-RS resource in which the beam is transmitted, a resource set index or TCI state information, etc.
   ■ the list of beams (and with a cell) may also be provided in the plural.
   ■ when beams that currently serve the UE do not belong to the given beam list, the UE may use default AD or request AD from the location server.
- when a validity timer is given,
   ■ in a case that the location server transmits a timer value and associated AD to the target UE, the UE may receive the AD and start a corresponding timer. AD information associated with the timer may be used as valid AD from after the timer value is received and until it is expired.
   ■ when the timer is expired,
      ◆ the location server may retransmit AD that includes AD information associated with a new timer value to the target UE; or
      ◆ the UE may request a new AD from the location server by indicating timer expiration in the AD request message. In response to this message, the location server may transmit AD associated with the new timer value to the target UE.
- when a time window value is given,
   ■ a value of a certain time interval may be given. The time interval may be a pair of a minimum value and a maximum value of a relative time value that indicates a particular interval from when the AD message is received. Alternatively, the time interval may be a value that indicates an absolute time pair, i.e., a minimum absolute time and a maximum absolute time.
      ◆ a relative time value pair is given, The target UE that receives this information may use corresponding associated AD when the current time has a value between a minimum relative value and a maximum relative value from after AD given the pair is received, after receiving a request for location information.
      ◆ an absolute time value pair is given, The target UE that receives this information may use corresponding associated AD when the current time has a value between a minimum time and a maximum time of the pair, after receiving a request for location information.
   ■ when the current time exceeds a maximum value of the timer window value, the UE may send a request for AD that includes a timer expiry indicator to the location server.
- the cell list information or beam list information may be used in combination with validity timer or time window information. In this case, after determining each serving cell or serving beam with a given list, the UE may further perform an operation of determining whether a validity timer operates or whether the corresponding time belongs to the time window. After this, when there is valid validity information in comparison with all validity information and a current condition of the target UE, the UE may use the associated AD information.

In FIG. 7, shown is AD validation after handover of the UE when a list of cells is given according to an embodiment of the disclosure.

In operation 710, when the location server (LMF) requests capability, a capability request message including an indicator, Preconfigured AD Inquiry, asking if AD preconfiguration is possible may be transmitted to the target UE.

In operation 720, in response to the capability request message, the target UE may transmit a capability response message that includes an indicator, AD Preconfig cap indication, indicating that AD preconfiguration is possible to the location server.

Alternatively, in operation 730, the target UE may transmit an indicator, Pre-AD req, requesting AD preconfiguration to the location server in the AD request message.

In operation 740, on receiving the AD request message or receiving the indicator indicating that AD preconfiguration is possible in the capability response message, the location server may associate list of {list of cells} information with part or the whole of AD and transmit it to the target UE in an AD provision message.

In operation 750, the target UE may perform handover from a cell of a gNB to a cell of a T-gNB. In operation 760, the target UE may receive a request for location information from the location server. In operation 770, the UE may determine which entry's cell list in the given list of {list of cells} it is that the current serving cell belongs to. When the current serving cell belongs to the given list of {list of cells}, the UE may use AD information associated with the list of cells for location measurement. Furthermore, in operation 780, the UE may report PRS measurement information or location estimation information that uses the AD to the location server.

FIG. 8 is a flowchart of operation of a UE in an idle state in providing specific-cell based assistance information, according to an embodiment of the disclosure.

In an embodiment, in FIG. 8, shown is an occasion when a UE in an idle/inactive mode performs validation with the given list of cells in performing cell reselection.

In operation 810, when the location server requests capability, it may transmit a capability request message including an indicator, Preconfigured AD Inquiry, asking if AD preconfiguration is possible to the target UE.

In operation 820, in response to the capability request message, the target UE may transmit an indicator, AD Preconfig cap indication, indicating that AD preconfiguration is possible to the location server in a response message.

Alternatively, in operation 830, the target UE may transmit an indicator, Pre-AD req, requesting AD preconfiguration to the location server in the AD request message.

In an embodiment, on receiving the AD request message or receiving the indicator indicating that AD preconfiguration is possible in the capability response message, the location server may associate list of {list of cells} information with part or the whole of AD and transmit it to the target UE in an AD provision message, in operation 840.

In another embodiment, rather than transmitting the AD provision message in an RRCDLInformation Transfer message, when the UE goes into an inactive mode, the location server may transmit an LPP AD provision message to the UE in an RRCRelease with suspendConfig message in operation 850.

Afterward, the UE may transition to an inactive state, and in operation 860, the UE may reselect a new cell. In operation 870, the UE may transmit, to the location server, an NAS container including an LCS event triggered report that includes change in cell or location into the reselected cell. In this case, the information is transmitted in an RRCULInformationTransfer message, which needs to be transmitted along with an RRCResumeReq message. On receiving this information, the location server may determine whether to perform an LPP procedure based on a received LCS event triggered report, in operation 875. Furthermore, the location server may request location information from the target UE in operation 880.

When the UE receives a request for location information from the location server while in an inactive state, in operation 885, the target UE may determine whether a current camping cell or serving cell is on a list of cells of validity information associated with the given AD, and if yes, determine the associated AD as valid AD. In operation 890, the target UE may perform PRS measurement based on the obtained AD and report the result value or a location estimate result to the location server.

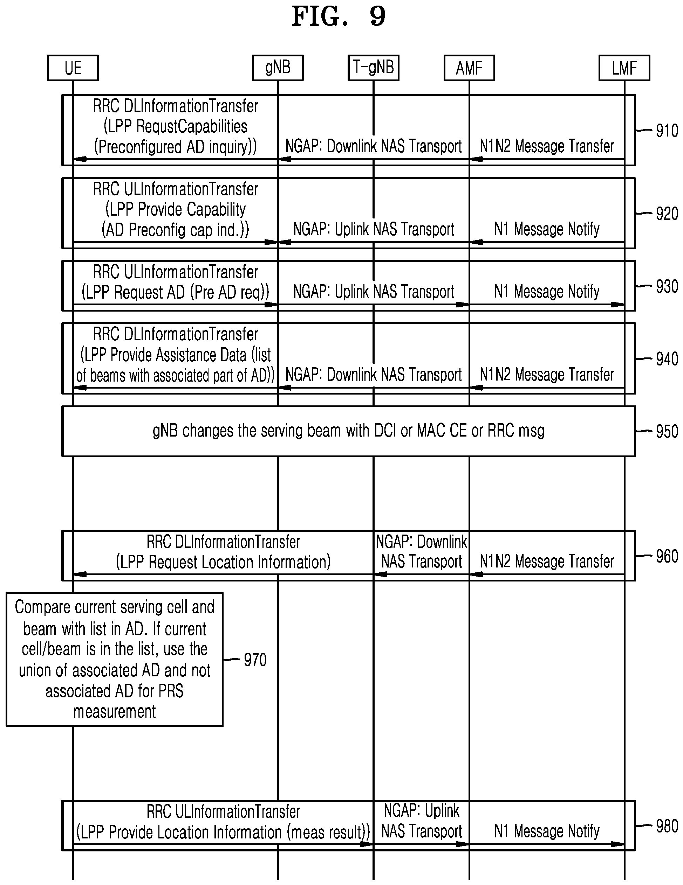

FIG. 9 is a flowchart illustrating a method of providing a serving beam list in AD validity information, according to an embodiment of the disclosure.

Referring to FIG. 9, shown is an embodiment of an occasion of providing a serving beam list in the AD validity information, according to an embodiment of the disclosure.

In operation 910, when the location server requests capability, it may transmit it including an indicator, Preconfigured AD Inquiry, asking if AD preconfiguration is possible to the target UE.

In operation 920, in response to this, the target UE may transmit an indicator, AD Preconfig cap indication, indicating that AD preconfiguration is possible to the location server in a response message.

Alternatively, in operation 930, the target UE may transmit an indicator, Pre-AD req, requesting AD preconfiguration to the location server in the AD request message.

On receiving the AD request message or receiving the indicator indicating that AD preconfiguration is possible in the capability response message, the location server may associate beam list information with part or the whole of AD and transmit it to the target UE in an AD provision message, in operation 940.

In operation 950, a gNB may change a serving beam through a downlink control information (DCI), MAC CE or RRC message. In a case that the location server requests location information in operation 960, when a serving beam at the moment matches any on a given AD beam list, the UE may determine the associated AD as valid AD. With this information, the UE may measure and estimate location information, and report the result value to the location server in operation 980. As mentioned above, a beam list may be further associated with a specific cell. In this case, the UE may first determine a serving cell, and then obtain valid AD by determining whether the serving beam is on the list.

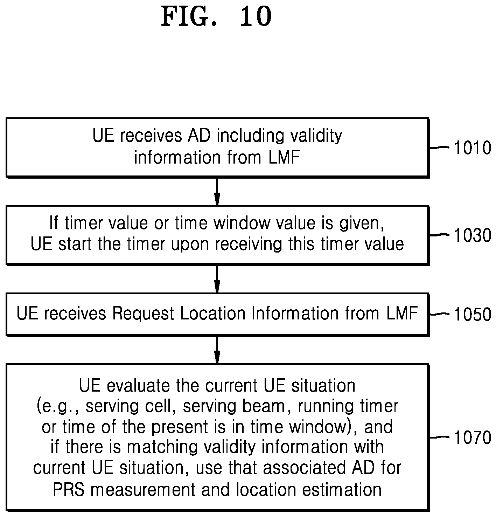

FIG. 10 is a flowchart illustrating a method of operating a UE, according to an embodiment of the disclosure.

In operation 1010, the UE may receive AD including validity information from the location server.

In operation 1030, when the location information includes a timer value or relative time window information, the UE may start a timer right from the moment when receiving this message.

Afterward, in operation 1050, the UE may receive a request for location information from the location server.

In operation 1070, it may be determined whether a current condition of the UE at the moment of receiving the location information request matches the given validity information. Specifically, a serving cell of the UE, a serving beam, an elapsed period of time after the start of the timer or whether the current time is within the time window value is determined, and when it matches the validity information, AD associated with the validity information may be used to measure the PRS and estimate a location. A result value of the measurement and the estimation may be reported to the location server.

Methods according to the claims of the disclosure or the embodiments described in the specification may be implemented in hardware, software, or a combination of hardware and software.

When implemented in software, a computer-readable storage medium storing one or more programs (software modules) may be provided. The one or more programs stored in the computer-readable storage medium are configured for execution by one or more processors in an electronic device. The one or more programs may include instructions that cause the electronic device to perform the methods in accordance with the claims of the disclosure or the embodiments described in the specification.

The programs (software modules, software) may be stored in a random access memory (RAM), a non-volatile memory including a flash memory, a read only memory (ROM), an electrically erasable programmable ROM (EEPROM), a magnetic disc storage device, a compact disc-ROM (CD-ROM), a digital versatile disc (DVD) or other types of optical storage device, and/or a magnetic cassette. Alternatively, the programs may be stored in a memory including a combination of some or all of them. Each of the memories may be provided in the plural.

The program may also be stored in an attachable storage device that may be accessed over a communication network including the Internet, an intranet, a local area network (LAN), a wide LAN (WLAN), or a storage area network (SAN), or a combination thereof. The storage device may be connected to an apparatus for performing the embodiments of the disclosure through an external port. Furthermore, an extra storage device in the communication network may access a device that performs the embodiments of the disclosure.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

Several embodiments of the disclosure have been described, but a person of ordinary skill in the art will understand and appreciate that various modifications can be made without departing the scope of the disclosure. Thus, it will be apparent to those of ordinary skill in the art that modifications to the embodiments of the disclosure based on the technical idea of the disclosure are also feasible. Furthermore, the embodiments may be operated by being combined with one another if necessary. For example, parts of an embodiment of the disclosure and another embodiment of the disclosure may be combined to operate the UDM, the vECS, the hECS, the UE, etc. The embodiments of the disclosure may be equally applied to other communication systems, and other modifications of the embodiments may also be made without departing from the scope of the disclosure.

Specific embodiments of the disclosure have thus been described, but it will be understood that various modifications can be made without departing from the scope of the disclosure. Thus, it will be apparent to those ordinary skilled in the art that the disclosure is not limited to the embodiments as described above, but can encompass not only the appended claims but the equivalents.

## Claims

1. A method of operating a user equipment (UE) in a wireless communication system, the method comprising:
transmitting an assistance data (AD) preconfiguration request message to a location server;
receiving an AD provision message including validity information from the location server;
receiving a location information request from the location server; and
transmitting location information to the location server, based on the AD provision message including the validity information,
wherein the validity information comprises at least one of cell list information, beam list information, timer information or time window information.
